Europäisches Patentamt

European Patent Office    (11) Publication number:    **0 063 193**

Office européen des brevets    **A1**

(19)

(12)    # EUROPEAN PATENT APPLICATION

(21) Application number: **81304315.5**    (51) Int. Cl.³: **B 60 N 1/00**

(22) Date of filing: **21.09.81**

(30) Priority: **01.10.80 GB 8031717**

(43) Date of publication of application:
**27.10.82 Bulletin 82/43**

(84) Designated Contracting States:
**DE FR IT NL SE**

(71) Applicant: **MOTOR PANELS (COVENTRY) LIMITED**
**Holbrook Lane**
**Coventry CV6 4AW(GB)**

(72) Inventor: **Taylor, Merrick Wentworth**
**72 Birches Lane**
**Kenilworth Warwickshire(GB)**

(72) Inventor: **Holman, Basil Arthur**
**45 Watery Lane**
**Keresley Coventry(GB)**

(74) Representative: **Stonehouse, Sidney William et al,**
**Barker, Brettell & Duncan 138 Hagley Road Edgbaston**
**Birmingham B16 9PW(GB)**

(54) Improvements relating to vehicle seats.

(57) A component for a vehicle seat, for example to form the seat proper or back rest of the seat, comprises a rigid frame (6, 15) to which a panel (13, 19) of uncushioned upholstery material is secured in tension by fasteners (14) which engage over a marginal portion of the material wrapped over an anchorage projection (12) on the frame. In the preferred embodiment the anchorage projection is formed by a strip extending along an inner face of the frame, and the marginal portion is passed around the frame before it is wrapped over the projection. The fasteners are spring clips which straddle the strip with the marginal portion gripped between the clips and the strip. A preferred upholstery material for the panel is a perforate sheet of a heat-set polyester. Protective padding (30) is applied to the frame over which the panel is fitted.

FIG.1

FIG 7

EP 0 063 193 A1

1

## IMPROVEMENTS RELATING TO VEHICLE SEATS

This invention relates to components for vehicle seats and seats including such components. It has relevance to seats for commercial and other vehicles, including aircraft.

Seats for vehicles generally comprise a seat portion and a back rest portion. These may be connected together or assembled in a fixed angular relationship to one another or the angle between the back rest portion and seat portion may be adjustable. Each of these portions or components comprises a base or frame covered with an upholstery material which is cushioned over those parts which support the occupant of the seat, that is to say the upper surface of the seat portion and the front surface of the back rest portion. These portions are often moulded or formed so as to provide lateral location and support. Such constructions provide a somewhat bulky appearance. Some of the materials used tend to promote perspiration.

According to a first aspect the present invention consists in a vehicle seat component comprising a rigid frame, a panel of uncushioned upholstery material being of a size such that it covers, or substantially covers, the frame, and fastening means whereby the panel is secured under tension over the whole, or substantially the whole, of the frame, the fastening means comprising at least in part at least one anchorage projection on the frame extending along the frame and over which a marginal portion of the panel is wrapped, and one or more fasteners which engage over the wrapped marginal portion of material on the anchorage projection and secure the wrapped marginal portion to the projection, and thereby to the frame.

The expression "upholstery material" as used herein is intended to include a sheet or net of material or webbing, and an essential property of the material is that is will support the weight of a normal adult human body without excessive sagging of the material.

Preferably the upholstery material allows "breathing" so as to avoid undue perspiration of the user. The material, when in sheet form, may have perforations. Non-limiting examples of suitable materials include canvas, woven man made fibres and formed, moulded or extruded plastics materials.

A protective covering may be applied to the frame before the upholstery material is fitted. This may be a foam plastic padding or cushioning which provides some resilence and eliminates wear of the upholstery material by rubbing contact with the frame. It may also serve to enhance the aesthetic appeal of the seat component.

The frame may be of generally rectangular shape. The panel of upholstery material may be secured just to two opposite sides of the frame or to all four sides of the frame. When applying the material to the frame it may be secured initially to the frame along one side thereof and then secured under tension to the opposite side of the frame. If the panel is to be secured to all four sides of the frame the material may then be secured under tension to the other two sides.

The frame of the seat component for a seat portion may comprise a generally rectangular frame formed in one piece from tube and having two sides a front and a rear. The two sides may be parallel to one another over intermediate parts of their lengths. The tube may be straight, or substantially straight, over these intermediate parts. The front end parts of the sides may sweep downwardly into rounded corners where they merge with the front of the frame. The front end parts of the sides may converge towards one another where they sweep downwardly. The rear end parts of the sides may also sweep downwardly into rounded corners where they merge with the rear of the frame, and the rear end parts may converge towards one another where they sweep downwardly. Between the rounded corners at their ends the front and rear of the frame may both be straight and parallel to one anther.

The seat portion and the back rest portion may be similar in form and construction to each other thereby effecting economies in production costs.

The frame of the seat component for a back rest portion may also comprise a frame formed in one piece from tube and having two sides a top and a bottom. The bottom may be longer than the top and both may be straight and parallel to one another between their ends which may be rounded to merge into the two sides. The two sides may be straight over an intermediate part of their lengths and they may converge towards the top. The lower ends of the sides may converge towards one another before rounding and merging with the bottom.

Preferably the or each anchorage projection of the fastening means, which may comprise a bar or strip, is provided along an inner face or faces of the frame, that is a face of faces directed towards the inside of the frame, and the marginal portion of the upholstery material is passed around the frame including an outer face or faces thereof before it is wrapped over the anchorage projection or projections. Generally there will be a plurality of the fasteners which are engaged over the wrapped marginal portion of the material on the anchorage pojection or the projections at spaced intervals so as to secured the material under tension to the frame. Preferably the or each fastener comprises a spring clip which straddles and grips the anchorage projection, or one of the achorage projections, with the marginal portion of the material held between the spring clip and the anchorage projection. Teeth, tangs or the like may be provided on the spring clip which dig into the material on the anchorage projection to enhance the securing of the material to the frame. A strip or strips of trimming, for example plastics trim, may be fitted over the fastener or fasteners on the or each anchorage projection.

For use on relatively wide vehicles, for example commercial vehicles, a seat comprising two components may have a back rest component which is pivoted forwardly with respect to the seat component to a generally horizontal position. The back rest component may have a frame which includes rearwardly projecting upper and lower transverse element. These may be tubular elements adapted to receive and retain in tension a further panel of upholstery material secured between them. An additional, generally vertical, element may be provided on the outboard side of the seat component with respect to a vehicle in which it is fitted and to which one side edge of a panel may be secured. This panel may then form one end of a bed as described in the specification of our European patent application No. 81301168.1.

According to a second aspect the present invention consists in a vehicle seat which includes a vehicle seat component in accordance with the first aspect of the invention as hereinbefore set forth.

The present invention enables a relatively inexpensive construction of seat to be provided which avoids the necessity for moulding or forming of the upholstery material for such purposes as cushioning and lateral location and support.

Embodiments of the invention will now be described by way of example with reference to the accompanying drawings in which:-

Figure 1 is a perspective view from the front and one side of a vehicle seat with a folding back rest to the back of which a bed end is fitted,

Figure 2 is a similar view of another vehicle seat having a fixed back rest,

Figure 3 is a perspective view from one side and the rear of a vehicle seat with a folding back rest to the back of which a bed end is fitted,

Figure 4 is a section through a tube of a vehicle seat,

Figure 5 is a side elevation of a fastening member,

Figure 6 is a plan view of the fastening member, and

Figure 7 is an enlarged section on line 7-7 of Figure 1.

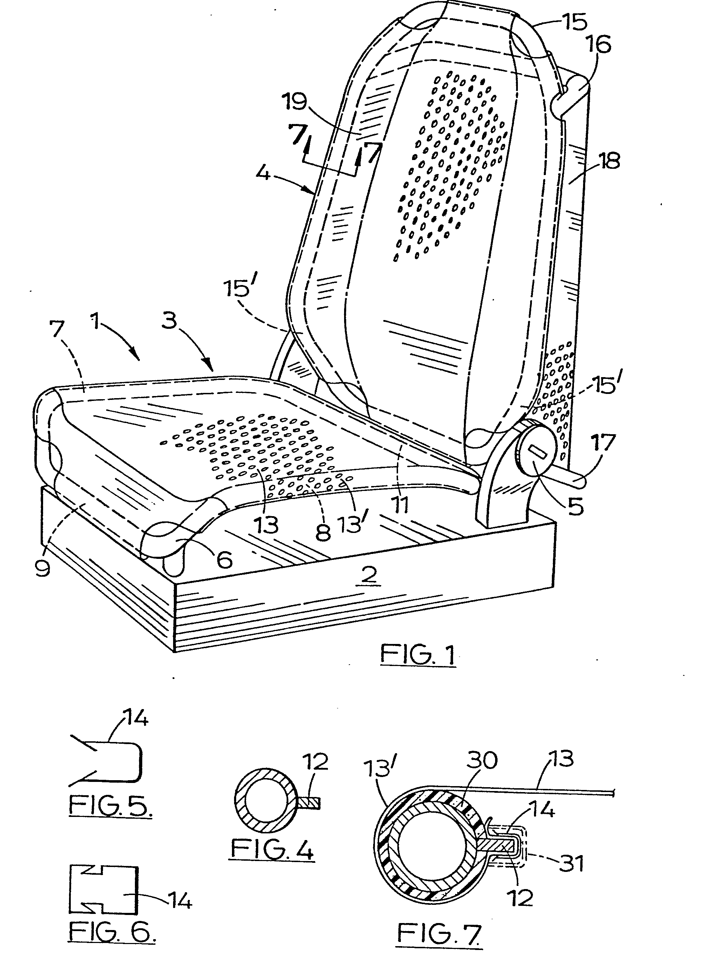

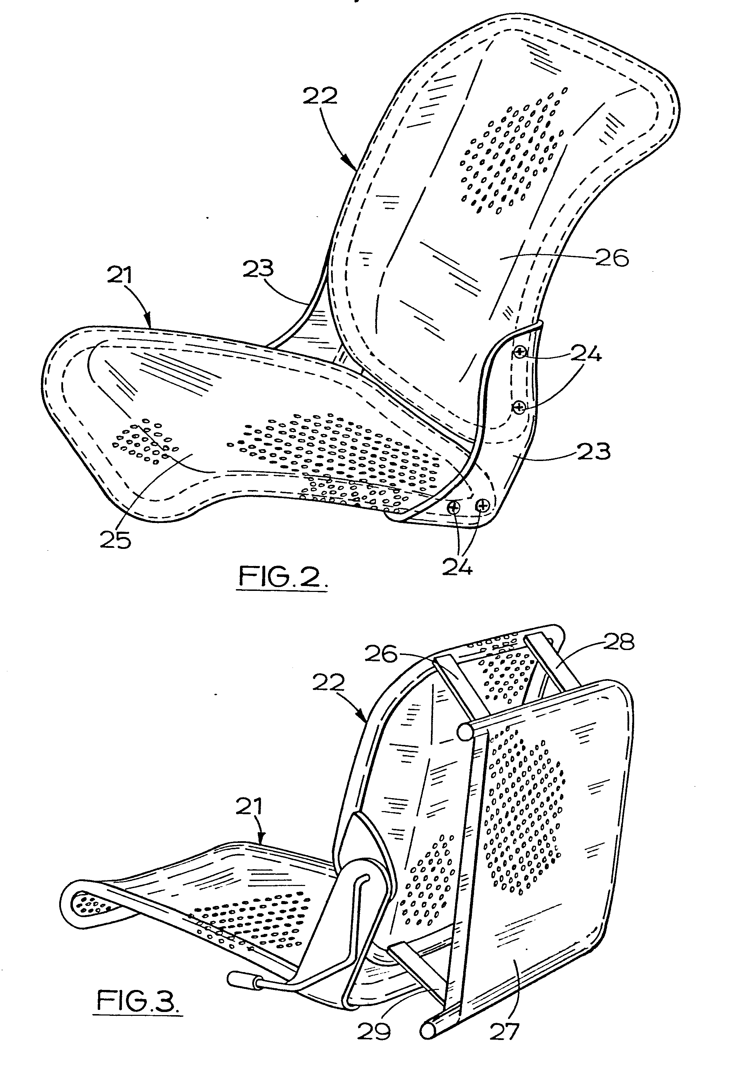

Referring to Figure 1 of the drawings, a vehicle seat 1 is mounted on a base 2 which may represent a fixed mounting for the seat or, as is usual for the driver's seat of a vehicle, a mechanism for forward and aft and vertical adjustment of the seat.

The vehicle seat 1 comprises two components, a seat component 3 and a back rest component 4, which are assembled together so that the back rest component 4 can be pivoted relative to the seat components 3 through an adjustment mechanism of known kind generally shown at 5.

The seat component 3 comprises a rigid frame 6 of round section metal tube having sides 7, 8 which are parallel to one anther over most of their lenghts and a front 9 and a rear 11 which are again parallel to one another over most of their lengths. The sides 7, 8 are joined to the front and rear 9, 11 at their ends by rounded corners which comprise compound bends.

Referring now to Figure 4, a cross-section of the tube of the frame 6 is shown which has a strip 12 secured to it, as by welding, which projects radially from the tube and extends along the tube inside the frame. The strip 12 may be continuous around the inside of the frame or it may be discontinuous, for example in the region of the corners.

The frame 6 is covered, or substantially covered, with a panel 13 of upholstery material. A suitable upholstery material is catalogue number R.5209 of Fryma Fabrics Limited of Nottingham, England. This is a heat-set polyester in sheet form with small perforations therein. The panel 13 is placed on the frame and one front or rear marginal portion 13' of the panel is wrapped round the tube of the front or rear of the frame, as the case may be, and over the strip 12, as shown in Figure 7, and spring clip fasteners 14, Figures 5, 6, and 7, are applied at intervals over the wrapped marginal portion 13' on the strip 12 to secure the material to the strip. The spring clip fasteners, as shown in Figure 7, straddle and grip the strip 12 with the marginal portion 13' of the upholstery material of the panel held between the clip and the strip. Tangs 14' on the spring clip fastners dig into the upholstery material on the strip to retain it securely on the strip. The opposite marginal portion of the panel is pulled taut to tension the upholstery material and is similarly secured to the tube at the other of the rear or front of the frame. Tensioning of the material results in the side edges of the panel being drawn in. Tension is applied to the side edges and these are secured in turn to the strip 12 along the sides 7, 8 of the frame. A trim strip, for example a U-section plastics strip may be applied over the spring clip fasteners and the strip 12, for example as indicated in broken lines at 31 in Figure 7.

Referring again to Figure 1, the back rest component 4 is similarly made with a frame 15 made from tube and of generally rectangular shape with rounded corners. The frame has its sides rearwardly curved as shown at 15'. Upper and lower tubular members 16, 17 respectively are secured, as by welding, to the frame 15 so as to project to the rear. These members 16, 17 provide an anchorage or support for a panel 18 of upholstery material which, when the back rest component is pivoted forwardly, may provide one end part of a bed. The panel 18 and a panel 19 of upholstery material for the back rest component 4 are secured under tension to the upper and lower members 16, 17 and to the frame 15 respectively in the manner described with reference to the seat component 3.

An alternative form of vehicle seat is shown in Figure 2, this seat is made up of two components, a seat component 21 and a back rest component 22, which are secured together in a fixed relationship by brackets 23 and screws 24. Panels 25 and 26 of upholstery material are respectively secured to frames of the two components in similar manner to that described above with reference to Figures 4, 5, 6 and 7 of the drawings.

In the further form shown in Figure 3 a vehicle seat is provided which has seat and back rest components 21, 22 similar to those of the seat of Figure 2, but is otherwise generally similar to the seat of Figure 1, having a bed end portion 27 secured by cranked upper members 28 and lower members 29 to the frame of the back rest component.

It will be seen that the panels of upholstery material cover the frames of the vehicle seats of Figures 2 and 3 whereas the corners of the frames of the seat of Figure 1 are left uncovered by the panels of upholstery material. Before fitting the panels, padding, for example plastics foam padding, may be fitted around the tube of each frame (except in the way of the strip 12), as shown at 30 in Figure 7. This prevents rubbing contact between the upholstery material and the frame, provides a degree of resilience, and may enhance the aesthetic appeal of the seat.

The perforate polyester sheet material mentioned above is particularly suitable for the panel of a vehicle seat component in accordance with the present invention because it promotes air flow around an occupant of a seat including the component, thereby improving comfort. It also helps to provide a light-weight and compact seat.

9

CLAIMS

1. A vehicle seat component characterised in that it comprises a rigid frame (6, 15), a panel (13, 18, 19, 25, 26) of uncushioned upholstery material being of a size such that it covers, or substantially covers, the frame (6, 15), and fastening means (12, 14) whereby the panel (13, 18, 19, 25, 26) is secured under tension over the whole, or substantially the whole, of the frame (6, 15), the fastening means (12, 14) comprising at least in part at least one anchorage projection (12) on the frame (6, 15) extending along the frame (6, 15) and over which a marginal portion (13') of the panel (13, 18, 19, 25, 26) is wrapped, and one or more fasteners (14) which engage over the wrapped marginal portion (13') on the anchorage projection (12) and secure the wrapped marginal portion (13') to the projection (12), and thereby to the frame (6, 15).

2. A vehicle seat component according to Claim 1 characterised in that protective padding (30) is applied to the frame (6, 15) and the panel (13, 18, 19, 25, 26) is fitted to the frame (6, 15) over the protective padding (30).

3. A vehicle seat component according to Claim 1 or Claim 2 characterised in that the frame (6, 15) is of generally rectangular shape and the panel (13, 18, 19, 25, 26) is secured by the fastening means (12, 14) to at least two opposite sides of the frame (6, 15).

4. A vehicle seat component according to any preceding claim characterised in that the upholstery material of which the panel (13, 18, 19, 25, 26) is made is a perforate sheet of a heat-set polyester.

5. A vehicle seat component according to any preceding claim characterised in that the or each anchorage projection (12) is provided along an inner face or faces of the frame (6, 15), and the marginal portion (13') of the upholstery material is passed around the frame (6, 15) including an outer face or faces thereof before it is wrapped over the anchorage projection or projections (12).

6. A vehicle seat component according to any preceding claim characterised in that the or each anchorage projection (12) is formed by a bar or strip secured along the frame (6, 15).

7. A vehicle seat component according to any preceding claim characterised in that the or each fastener (14) comprises a spring clip which straddles and grips the anchorage projection (12), or any one of the anchorage projections (12), with the marginal portion (13') of the upholstery material held between the spring clip and the anchorage projection (12).

8. A vehicle seat component according to any preceding claim characterised in that a trimming strip (31) is fitted over the fastener or fasteners (14) on the anchorage projection or projections (12).

9. A vehicle seat characterised in that it includes a vehicle seat component (3, 4, 21, 22) as claimed in any preceding claim.

10. A vehicle seat according to Claim 9 characterised in that there are two of the vehicle seat components (3, 4, 21, 22), one component (3, 21) forming a seat proper and the other component (4, 22) forming a back rest of the seat.

11

11. A vehicle seat according to Claim 10 characterised in that the two seat components (3, 4, 21, 22) are similar to each other in form and construction.

FIG. 1

FIG. 5.

FIG. 6.

FIG. 4

FIG. 7

FIG.2.

FIG.3.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | US – A – 2 060 465 (D.A. GREENE)<br><br>* the whole document *<br><br>-- | 1,3,5,<br>6,7,9 |
| | GB – A – 686 233 (E.B. FERNBERG)<br><br>* the whole document *<br><br>-- | 1,3,5,<br>6,7,9 |
| | US – A – 3 423 775 (R. COCKERILL)<br><br>* the whole document *<br><br>-- | 1,3,5,<br>6,7,9 |
| A | FR – A – 1 024 058 (TUBAUTO) | 1,5 |
| A | FR – A – 1 092 024 (F.T. PRODUCTS LTD.) | 1,7 |
| A | GB – A – 579 792 (C.F. DEANS) | 6 |
| A | DE – B – 1 092 322 (N.S.U. WERKE A.G.) | 1,2 |

-----------

**CLASSIFICATION OF THE APPLICATION (Int. Cl.³)**

B 60 N 1/00

**TECHNICAL FIELDS SEARCHED (Int. Cl.³)**

B 60 N 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 9-12-1981 | CORMACI |

EPO Form 1503.1   06.78